# EUROPÄISCHE PATENTSCHRIFT

(11) **EP 3 213 314 B1**
(45) Veröffentlichungstag und Bekanntmachung des Hinweises auf die Patenterteilung: **12.04.2023**
(21) Anmeldenummer: 15774570.4
(22) Anmeldetag: 29.09.2015
(51) Int. Cl.: G08G 1/14, G05D 1/02

(54) **VERFAHREN UND SYSTEM ZUM FÜHREN EINES FAHRZEUGS ZU EINEM FREIEN STELLPLATZ AUF EINEM PARKPLATZ**
METHOD AND SYSTEM FOR GUIDING A VEHICLE TO A FREE PARKING SPACE IN A CAR PARK
PROCÉDÉ ET SYSTÈME DE GUIDAGE D'UN VÉHICULE VERS UNE PLACE DE STATIONNEMENT LIBRE D'UN PARKING

(30) Priorität: 27.10.2014 DE 102014221746
(43) Veröffentlichungstag der Anmeldung: 06.09.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/072323
(87) Internationale Veröffentlichungsnummer: WO 2016/066350

(56) Entgegenhaltungen:
- EP-A2- 2 624 236
- CN-A- 102 163 375
- CN-A- 103 942 974
- US-A1- 2011 182 703
- CHENG WEI ET AL: "Virtual track: applications and challenges of the RFID system on roads", IEEE NETWORK, IEEE SERVICE CENTER, NEW YORK, NY, US, Bd. 28, Nr. 1, 28. Februar 2014 (2014-02-28), Seiten 42-47, XP011538451, ISSN: 0890-8044, DOI: 10.1109/MNET.2014.6724105 [gefunden am 2014-01-24]

## Beschreibung

Die Erfindung betrifft ein Verfahren zum Führen eines Fahrzeugs zu einem freien Stellplatz auf einem Parkplatz mit einer Vielzahl von Stellplätzen, wobei jedem Stellplatz eine Stellplatzmarkierung zugeordnet ist. Weitere Aspekte der Erfindung betreffen einen Parkplatz, ein Fahrzeug sowie ein System, welche jeweils eingerichtet sind, das Verfahren auszuführen.

### Stand der Technik

Zur Erleichterung der Parkplatzsuche sind Dienstleistungen bekannt, bei denen der Fahrer sein Fahrzeug an einen Betreiber eines Parkplatzes übergibt und dieser daraufhin das Einparken des Fahrzeugs übernimmt. Wird das Fahrzeug wieder von seinem Eigentümer bzw. von seinem Fahrer benötigt, wird das Fahrzeug vom Betreiber des Fahrzeugs aus dem Stellplatz ausgeparkt und in einem Abholbereich zur Abholung bereitgestellt. Diese Dienstleistung wird auch als Valet-Parking bezeichnet.

Üblicherweise wurde diese Dienstleistung bisher realisiert, indem der Fahrer bei der Ankunft seinen Schlüssel an einen Mitarbeiter des Parkplatzbetreibers übergibt. Das Ein- und Ausparken des Fahrzeugs wird dann von dem Mitarbeiter durchgeführt, der das Fahrzeug von einer Übergabezone zum Parkplatz und wieder zurück zu einem Abholbereich fährt.

Des Weiteren ist beispielsweise aus DE 10 2012 015 968 A1 ein Verfahren zum fahrerlosen Bewegen eines Fahrzeugs auf einer Parkfläche bekannt. Dabei sind die Fahrzeuge mit Assistenzsystemen ausgerüstet, die ein autonomes Fahren gestatten. Dabei ist vorgesehen, einer externen Steuerungseinrichtung Zugriff auf das Fahrzeug zu ermöglichen, um dieses zu oder von einem zugewiesenen Stellplatz der Parkfläche zu steuern.

Eine Herausforderung im Zusammenhang mit dem vollautomatisierten Einparken ist das Navigieren auf dem Parkplatz bzw. in dem Parkhaus. Dies ist unter anderem dadurch begründet, dass auf Parkplätzen und vor allem in Parkhäusern in der Regel keine ausreichenden Fahrbahnmarkierungen bzw. keine ausreichenden Markierungen der jeweiligen Fahrspuren vorhanden sind, insbesondere in Parkhäusern oder auch in Tiefgaragen keine Satellitennavigation zur Verfügung steht und häufig keine genauen Karten zum Navigieren vorliegen. Des Weiteren muss genau erkannt werden, welcher Stellplatz auf dem Parkplatz noch frei ist bzw. bereits belegt ist und im Parkhaus muss neben einer Position in der Ebene zusätzlich die Höhe bzw. das Parkdeck bekannt sein bzw. durch das Fahrzeug feststellbar sein.

Aus US 2012/0092189 A1 ist ein RFID-basierendes Verfahren bekannt, mit dem die Belegung eines Stellplatzes erkannt werden kann. Dazu weist jeder Stellplatz ein RFID-Tag auf. Ist ein Stellplatz durch ein Fahrzeug belegt, so wird das Signal des RFID-Tags blockiert, so dass ein Lesegerät auf eine Anfrage hin nur Antworten von den RFID-Tags erhalten kann, die unbelegten Stellplätzen zugeordnet sind.

Aus US 2002/0143465 A1 ist ein Verfahren zur Bestimmung einer Position eines Fahrzeugs auf einer Fahrbahn bekannt. In die Fahrbahn werden dazu Magnete eingelassen, wobei die Fahrspur über die Polarität der Magnete bzw. über eine Abfolge von Polaritätswechseln codiert werden kann.

Die Offenlegungsschrift CN 102163375 A zeigt einen aktiven RFID-Tag.

Es besteht im Stand der Technik Bedarf nach einem Verfahren, mit dem ein autonom fahrendes Fahrzeug seine Position auf einem Parkplatz genau bestimmen kann und den Weg zu einem freien Stellplatz ohne Hilfe einer zentralen Steuereinheit finden kann.

### Offenbarung der Erfindung

Es wird ein Verfahren zum Führen eines Fahrzeugs zu einem freien Stellplatz gemäß Anspruch 1.

Bei dem Parkplatz kann es sich beispielsweise um einen offenen Parkplatz, ein Parkhaus oder um eine Tiefgarage handeln. Jedem Stellplatz des Parkplatzes ist dabei eine Stellplatzmarkierung zugeordnet, die zumindest eine Information darüber speichert, ob der jeweilige Stellplatz belegt ist oder frei ist. Das Fahrzeug ist mit einem Parkassistenzsystem ausgerüstet, welches eine autonome Fahrt gestattet. Durch das Assistenzsystem wird demnach sowohl die Querführung (Lenkung) als auch die Längsführung (Beschleunigen und Bremsen) übernommen. Das Fahrzeug wird von seinem Fahrer zunächst in die Nähe des Parkplatzes bzw. zu einer Übergabezone auf den Parkplatz gefahren. Dort steigt der Fahrer aus und aktiviert das Parkassistenzsystem, um sein Fahrzeug automatisch zu einem freien Stellplatz führen zu lassen.

Das Fahrzeug fährt autonom in den Parkplatz ein, wobei das Fahrzeug mit einem geeigneten Lesegerät die den Stellplätzen zugeordneten Stellplatzmarkierungen ausliest. Wird ein Stellplatz als belegt erkannt, fährt das Fahrzeug weiter. Erkennt das Fahrzeug hingegen einen freien Stellplatz, so parkt das Fahrzeug in diesen Stellplatz ein und verwendet ein Schreibgerät, um die Stellplatzmarkierung des Stellplatzes neu zu beschreiben, so dass dieser nun den Zustand "Stellplatz belegt" speichert. Je nach Ausführungsvariante des Verfahrens kann das Neubeschreiben der Markierung vor dem Beginn des Einparkens, nach dem Beenden des Einparkens oder während des Einparkmanövers erfolgen. Wird das Fahrzeug von seinem Fahrer bzw. seinem Besitzer wieder benötigt, so aktiviert er über ein geeignetes Fernsteuergerät das Assistenzsystem seines Fahrzeugs erneut, so dass dieses aus dem Parkplatz ausparkt und eine Abholzone des Parkplatzes ansteuert. Beim Ausparken, nach dem Ausparken oder unmittelbar vor dem Ausparken, je nach Ausführungsvariante des Verfahrens, wird durch das Schreibgerät des Fahrzeugs die Stellplatzmarkierung des Stellplatzes wieder erneut beschrieben, so dass diese nun den Zustand "Stellplatz frei" speichert.

Das Fernsteuergerät kann beispielsweise in den Fahrzeugschlüssel integriert sein oder in Form einer Anwendung für ein Mobiltelefon ausgestaltet sein. In weiteren Ausführungsformen des Verfahrens gibt der Fahrer eine Uhrzeit vor, zu der er das Fahrzeug wieder benötigt. Das Assistenzsystem des Fahrzeugs aktiviert sich dann bei Erreichen der vorgegebenen Uhrzeit selbsttätig, so dass das Fahrzeug rechtzeitig die Abholzone ansteuert und zur Abholung durch den Fahrer bereitsteht.

In einer Ausführungsform des Verfahrens führt eine Fahrbahn des Parkplatzes an den Stellplätzen vorbei und der Fahrbahn sind Fahrbahnmarkierungen zugeordnet, über die das Fahrzeug eine Fahrspur erkennen kann. Ferner ist vorgesehen, dass bei der Suche eines freien Stellplatzes das Fahrzeug einer durch die Fahrbahnmarkierungen gekennzeichneten Fahrspur folgt und während der Fahrt auf der Fahrbahn die Stellplatzmarkierungen von an die Fahrbahn angrenzenden Stellplätzen ausliest. Erkennt das Fahrzeug einen freien Stellplatz, verlässt es die Fahrbahn und parkt auf dem freien Stellplatz ein.

Wird die Fahrbahn so mit den Fahrbahnmarkierungen gekennzeichnet, dass das Fahrzeug beim Folgen der Fahrbahnmarkierungen an allen Stellplätzen des Parkplatzes vorbeikommt, ist in jedem Fall gewährleistet, dass das Fahrzeug einen freien Stellplatz findet und diesen nutzen kann, sofern noch mindestens ein freier Stellplatz auf dem Parkplatz vorhanden ist. Dies wiederum kann zum Beispiel dadurch sichergestellt werden, dass vor der Einfahrt auf dem Parkplatz eine Kontrolleinrichtung platziert ist, die die Zufahrt zum Parkplatz nur dann freigibt, wenn noch mindestens ein freier Stellplatz vorhanden ist. Dabei kann die Anzahl der freien Stellplätze einfach dadurch ermittelt werden, dass einfahrende und ausfahrende Fahrzeuge gezählt werden und für jedes einfahrende Fahrzeug die Anzahl der freien Parkplätze um eins vermindert und für jedes ausfahrende Fahrzeug um eins erhöht wird.

Um das Fahrzeug rascher zu einem freien Stellplatz zu leiten, kann in weiteren Ausführungsformen vorgesehen werden, dass durch eine dem Parkplatz zugeordnete Infrastruktur weitere Führungsinformationen an das Fahrzeug gesendet werden und/oder die Fahrbahnmarkierungen über ein zentrales System beeinflusst werden.

Gemäß der Erfindung, sind die Stellplatzmarkierungen als RFID-Tags ausgeführt, welche jeweils einem Stellplatz zugeordnet sind. Die RFID-Tags speichern dabei zumindest die Information über die Belegung des Stellplatzes. In weiteren Fortbildungen des Verfahrens können die RFID-Tags beispielsweise zusätzlich eine Stellplatznummer, Kosten des Parkplatzes, Angaben darüber, ob der Parkplatz überdacht ist, eine Lademöglichkeit für Elektrofahrzeuge vorhanden ist oder ob eine zusätzliche Bewachung angeboten wird, speichern.

Die Fahrbahnmarkierungen sind bevorzugt so ausgestaltet, dass diese eine Information über die Richtung der Fahrspur umfassen. Eine solche Richtungsinformation kann beispielsweise eine Kennzeichnung einer Fahrspur als linke Fahrspur oder rechte Fahrspur sein, aber kann auch als Kennzeichnung ausgestaltet sein, ob die Fahrspur in den Parkplatz hinein- oder herausführt. Auf diese Weise wird sichergestellt, dass die autonom fahrenden Fahrzeuge auf dem Parkplatz jederzeit wissen, in welche Richtung eine Fahrspur führt, wodurch möglichen Kollisionen vorgebeugt wird. Die Fahrbahnmarkierungen können je nach Ausführungsvariante als in die Fahrbahn eingelassene Magnete und/oder als der Fahrbahn zugeordnete RFID-Tags ausgeführt sein.

Bei Ausführung als RFID-Tag können die Fahrbahnmarkierungen eine Vielzahl von Informationen speichern, darunter neben einer Richtungsinformation auch Angaben zur zulässigen Geschwindigkeit, Kurvenradien oder Angaben zur Steigung von Auf- und Abfahrten. Sind die Fahrbahnmarkierungen als in die Fahrbahn eingelassene Magnete ausgeführt, können Informationen beispielsweise über die Polarität des Magneten oder durch eine Abfolge von mehreren Magneten, wobei jeder Magnet eine andere Polarität aufweisen kann, codiert werden. Beispielsweise kann eine rechte Fahrspur dadurch markiert werden, dass der magnetische Nordpol der Magnete nach oben zeigt und eine linke Fahrspur dadurch markiert werden, dass deren magnetischer Südpol nach oben zeigt.

Des Weiteren kann bei dem Verfahren vorgesehen werden, dass dem Parkplatz zusätzliche Positionsmarkierungen zugeordnet sind, die Informationen über eine Position und/oder mögliche Fahrspuren bereitstellen. Dabei kann die Information eine Position innerhalb eines Parkhauses oder einer Tiefgarage, insbesondere eine Information über das Stockwerk bzw. das Parkdeck beinhalten. Eine Information über mögliche Fahrspuren kann dem Fahrzeug beispielsweise mitteilen, dass an dem jeweiligen Ort beispielsweise nur eine Fahrspur bereitsteht oder kann Navigationsinformation beinhalten, die das Fahrzeug in die Lage versetzen, eine bestimmte Fahrspur gezielt anzusteuern. Zudem wird das Fahrzeug über die Positionsmarkierung in die Lage versetzt, seine Position auf dem Parkplatz genau zu bestimmen, auch wenn gerade kein Satellitennavigationssystem zur Verfügung steht.

In einer Ausführungsform sind die Positionsmarkierungen als RFID-Tags ausgeführt. Weitere denkbare Möglichkeiten für die Positionsmarkierungen sind aber auch optische Markierungen, beispielsweise in Form von QR-Codes. Des Weiteren können QR-Codes insbesondere im Bereich der Einfahrt auf einer Internetseite verweisen, auf der alle relevanten Daten zum Parkplatz gespeichert sind.

Ein weiterer Aspekt der Erfindung betrifft die Bereitstellung eines Parkplatzes umfassend eine Vielzahl von Stellplätzen, wobei jedem Stellplatz eine Stellplatzmarkierung zugeordnet ist, die eingerichtet ist, zumindest eine Information über die Belegung des jeweiligen Stellplatzes zu speichern. Ferner ist der Parkplatz bevorzugt zur Ausführung eines der beschriebenen Verfahren eingerichtet.

Ein weiterer Aspekt der Erfindung ist die Bereitstellung eines Fahrzeugs umfassend ein Steuergerät und ein Lese-/Schreibgerät, welches eingerichtet ist, Stellplatzmarkierungen auszulesen und neu zu beschreiben. Ferner ist das Fahrzeug eingerichtet, eines der beschriebenen Verfahren auszuführen.

Zudem ist es eine Aufgabe der Erfindung ein System bereitzustellen, umfassend einen Parkplatz sowie ein Fahrzeug, welche eingerichtet sind, gemeinsam das beschriebene Verfahren auszuführen.

Sowohl der Parkplatz, das Fahrzeug als auch das System sind bevorzugt eingerichtet, eines der beschriebenen Verfahren zum Führen eines Fahrzeugs auszuführen. Dementsprechend gelten im Rahmen des Verfahrens beschriebene Merkmale entsprechend für den Parkplatz, das Fahrzeug bzw. das System und umgekehrt im Rahmen des Parkplatzes, des Fahrzeugs oder des Systems beschriebene Merkmale für das Verfahren.

### Vorteile der Erfindung

Durch das erfindungsgemäße Verfahren bzw. das erfindungsgemäße System bestehend aus Parkplatz und Fahrzeug kann ein Fahrzeug selbstständig seine Position auf einem Parkplatz feststellen und einen freien Stellplatz finden. Für das Ermitteln eines freien Stellplatzes werden Markierungen eingesetzt, mit denen das Fahrzeug interagieren kann. Dabei ist vorteilhafterweise vorgesehen, dass ein Fahrzeug, welches in einen freien Stellplatz einfährt, diesen über ein Schreibgerät als belegt markiert. Nachfolgende Fahrzeuge erkennen dann diesen Parkplatz als belegt, ohne dass es dazu den Eingriff einer zentralen Steuereinrichtung bedarf.

Sind die Fahrbahnen bzw. die Fahrspuren des Parkplatzes zudem mithilfe von Fahrbahnmarkierungen gekennzeichnet, kann das Fahrzeug dieser gekennzeichneten Fahrspur präzise folgen, ohne dass es zu großen Abweichungen kommt. Selbst ohne Zuhilfenahme weiterer Sensoren, mit denen das Fahrzeug beispielsweise Hindernisse erkennt, ist dadurch bereits ein sicheres Navigieren auf dem Parkplatz möglich. Ferner können die Fahrbahnen so markiert werden, dass das Fahrzeug beim Folgen der markierten Fahrspur an den Stellplätzen des Parkplatzes vorbeigeführt wird. Während der Vorbeifahrt kann das Fahrzeug selbstständig freie Stellplätze erkennen und auf einen freien Stellplatz einparken. Auch hierfür ist keine zentrale Steuerung erforderlich.

Zudem kann durch das Vorsehen von Positionsmarkierungen das Fahrzeug seine Position auf dem Parkplatz eindeutig und genau erkennen. Dies ist insbesondere dann vorteilhaft, wenn beispielsweise in einem Parkhaus oder in einer Tiefgarage keine Satellitennavigation verfügbar ist. Zudem wäre auch beim Vorhandensein eines Satellitensignals die Bestimmung der Etage bzw. des Parkdecks nur schwer oder gar nicht möglich.

Durch das Zusammenwirken von Fahrbahnmarkierungen und Stellplatzmarkierungen ist es einem autonom fahrenden Fahrzeug möglich, sicher auf dem Parkplatz zu navigieren und einen freien Stellplatz aufzusuchen, ohne dass hochgenaue Karten oder eine zentrale Steuerung erforderlich sind.

### Kurze Beschreibung der Figuren

Ausführungsbeispiele der Erfindung sind in den Zeichnungen dargestellt und in der nachfolgenden Beschreibung näher erläutert. Die einzige Figur zeigt eine schematische Ansicht eines Parkplatzes mit einer Vielzahl von Stellplätzen von oben.

Die Figur stellt den Gegenstand der Erfindung schematisch dar.

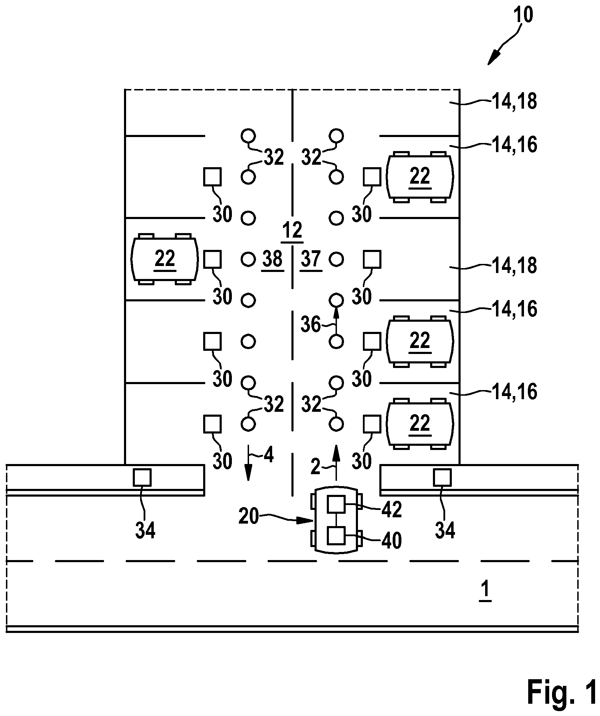

In Figur 1 ist ein Parkplatz 10 dargestellt, der eine Vielzahl von Stellplätzen 14 umfasst. Der Parkplatz 10 grenzt an eine Straße 1 an und umfasst eine Einfahrt 2 über die ein Fahrzeug 20 auf den Parkplatz 10 gelangen kann sowie eine Ausfahrt 4 über die ein Fahrzeug 20 den Parkplatz 10 wieder verlassen kann.

Ein Fahrer des Fahrzeugs 20 muss sein Fahrzeug 20 nur bis zur Einfahrt 2 fahren, kann dort das Fahrzeug 20 verlassen und den automatischen Einparkvorgang aktivieren.

Zur Unterstützung des automatischen Einparkens umfasst das Fahrzeug 20 ein Steuergerät 40 sowie ein Lese-/Schreibgerät 42. Das Lese-/Schreibgerät 42 ist eingerichtet, Stellplatzmarkierungen 30, die den Stellplätzen 14 zugeordnet sind, auszulesen und gegebenenfalls neu zu beschreiben. Ferner ist das Lese-/Schreibgerät 42 ausgebildet, Fahrbahnmarkierungen 32, die in eine Fahrbahn 12 des Parkplatzes 10 integriert sind, auszulesen.

In der in Figur 1 dargestellten Ausführungsform sind die Fahrbahnmarkierungen 32 in Form von in die Fahrbahn 12 eingelassenen Magneten ausgestaltet. Dabei weisen die Fahrbahnmarkierungen 32 bzw. die entsprechenden Magnete teilweise unterschiedliche Polarität auf, das heißt ein Teil der Magnete weist mit dem magnetischen Nordpol nach oben, ein Teil der Magnete mit dem magnetischen Nordpol nach unten. Durch die Polarität der Magnete wird mithilfe der Fahrbahnmarkierungen 32 die Fahrbahn 12 in zwei Fahrspuren unterteilt, nämlich eine rechte Fahrspur 37 und eine linke Fahrspur 38, wobei die rechte Fahrspur 37 in den Parkplatz 10 hineinführt und die linke Fahrspur 38 aus dem Parkplatz 10 herausführt. In der Figur 1 ist die Fahrrichtung mit einem Pfeil mit dem Bezugszeichen 36 angedeutet.

Nachdem das Fahrzeug 20 in die Einfahrt 2 eingefahren ist und der Fahrer das Fahrzeug 20 verlassen hat, wird das automatische Einparken aktiviert. Gesteuert durch das Steuergerät 40 fährt das Fahrzeug 20 nun entlang der mit den Fahrbahnmarkierungen 32 gekennzeichneten rechten Fahrspur 37. Dabei fährt das Fahrzeug 20 an den Stellplatzmarkierungen 30 der an die rechte Fahrspur 37 angrenzenden Stellplätze 14 vorbei. In der in Figur 1 dargestellten Situation fährt das Fahrzeug 20 zunächst an zwei durch weitere Fahrzeuge 22 belegten Stellplätzen 16 vorbei, die es anhand der in den Stellplatzmarkierungen 30 gespeicherten Informationen über das Lese-/Schreibgerät 42 auch als belegt erkennt. Als nächstes fährt das Fahrzeug 20 an einem freien Stellplatz 18 vorbei, den das Fahrzeug 20 über das Lese-/Schreibgerät 42 auch als frei erkennt, indem die entsprechende Stellplatzmarkierung 30 des Stellplatzes 14 ausgelesen wird.

Da das Fahrzeug 20 einen freien Stellplatz 18 erkannt hat, verlässt es nun die rechte Fahrspur 37 und parkt auf dem freien Stellplatz 18 ein. Vor Beginn des Einparkmanövers wird über das Lese-/Schreibgerät 42 die entsprechende Stellplatzmarkierung 30 des Stellplatzes 14 neu beschrieben, so dass die Stellplatzmarkierung 30 nun die Information "Stellplatz belegt" speichert. Nach Abschluss des Einparkvorgangs wartet das Fahrzeug 20, bis es von seinem Fahrer bzw. Eigentümer wieder benötigt wird.

Wird das Fahrzeug 20 wieder benötigt, kann es von seinem Fahrer bzw. von seinem Besitzer zu einem Abholort gerufen werden. In der in Figur 1 dargestellten Ausführungsform ist der Abholort identisch mit der Ausfahrt 4 des Parkplatzes 10. Zum Rufen des Fahrzeugs 20 kann der Fahrer eine entsprechende Fernbedienungseinrichtung einsetzen, die beispielsweise Teil des Fahrzeugschlüssels ist oder als Anwendung auf einem Mobiltelefon ausgestaltet ist. Ebenfalls ist es denkbar, vor der Übergabe des Fahrzeugs 20 an den Parkplatzbetreiber des Parkplatzes 10 bereits eine Abholzeit in das Steuergerät 40 einzuprogrammieren, so dass das Fahrzeug 20 zur vorprogrammierten Zeit selbstständig mit dem Ausparken beginnt.

Beim Ausparken aus einem Stellplatz 14 fährt das Fahrzeug 20 aus diesem heraus und gelangt wieder auf die Fahrbahn 12 des Parkplatzes 10. Dort kann das Fahrzeug 20 über das Lese-/Schreibgerät 42 wieder die Fahrspuren 37, 38 der Fahrbahn 12 identifizieren, wobei es die linke Fahrspur 38 wählt, die aus dem Parkplatz 10 heraus in Richtung der Ausfahrt 4 führt. Wiederum erkennt das Fahrzeug 20 die linke Fahrspur 38 über die der Fahrbahn 12 zugeordneten Fahrbahnmarkierungen 32. Nach Erreichen der Ausfahrt 4 steht das Fahrzeug 20 zur Abholung durch seinen Fahrer bereit.

Zur Identifikation der Positionen von der Einfahrt 2 und der Ausfahrt 4 können dem Parkplatz 10 weitere Markierungen zugeordnet sein. In der in Figur 1 dargestellten Ausführungsform sind dazu jeweils eine Positionsmarkierung 34 im Bereich der Einfahrt 2 und der Ausfahrt 4 vorgesehen. Über die Positionsmarkierungen 34 kann das Fahrzeug 20 Informationen über die Lage der Einfahrt 2 bzw. der Ausfahrt 4 sowie weitere Informationen beispielsweise über die auf dem Parkplatz 10 zur Verfügung stehenden Fahrspuren 37 und 38 erhalten. Des Weiteren ist es denkbar, die Positionsmarkierungen 34 zu nutzen, um dem Fahrzeug 20 bzw. dem Steuergerät 40 mitzuteilen, dass auf dem Parkplatz 10 die für die Durchführung des Verfahrens notwendigen Markierungen 30, 32 zur Verfügung stehen und daher ein automatisches Einparken angeboten werden kann.

Die Erfindung ist nicht auf die hier beschriebenen Ausführungsbeispiele und die darin hervorgehobenen Aspekte beschränkt. Vielmehr sind innerhalb des durch die Ansprüche angegebenen Bereichs eine Vielzahl von Abwandlungen möglich, die im Rahmen fachmännischen Handelns liegen.

## Patentansprüche

1. Verfahren zum Führen eines Fahrzeugs (20) zu einem freien Stellplatz (18) auf einem Parkplatz (10) mit einer Vielzahl von Stellplätzen (14), wobei jedem Stellplatz (14) eine Stellplatzmarkierung (30) zugeordnet ist, **dadurch gekennzeichnet, dass** die Stellplatzmarkierung (30) zumindest eine Information über die Belegung des Stellplatzes (14) speichert und das Fahrzeug (20) ein Lese-/ Schreibgerät (42) umfasst, welches eingerichtet ist, Stellplatzmarkierungen (30) auszulesen und neu zu beschreiben, wobei das Fahrzeug (20) beim Einparken in einen Stellplatz (14) den Stellplatz (14) über die Stellplatzmarkierung (30) mittels des Lese-/ Schreibgeräts (42) als belegt markiert und beim Ausparken aus dem Stellplatz (14) den Stellplatz (14) über die Stellplatzmarkierung (30) mittels des Lese-/ Schreibgeräts (42) wieder als frei markiert.

2. Verfahren nach Anspruch 1, **dadurch gekennzeichnet, dass** eine Fahrbahn (12) des Parkplatzes (10) an den Stellplätzen (14) vorbeiführt und der Fahrbahn (12) Fahrbahnmarkierungen (32) zugeordnet sind, über die das Fahrzeug (20) eine Fahrspur (37, 38) erkennen kann, wobei das Fahrzeug (20) während der Fahrt auf der Fahrbahn (12) die Stellplatzmarkierungen (30) der an die Fahrbahn (12) angrenzenden Stellplätze (14) ausliest und das Fahrzeug (20) bei Erkennen eines freien Stellplatzes (18) die Fahrbahn (12) verlässt und auf den freien Stellplatz (18) einparkt.

3. Verfahren nach Anspruch 1 oder 2, **dadurch gekennzeichnet, dass** die Stellplatzmarkierungen (30) als RFID-Tags ausgeführt sind, welche jeweils einem Stellplatz (14) zugeordnet sind und dass das RFID-Tag zumindest die Information über die Belegung des Stellplatzes (14) speichert.

4. Verfahren nach Anspruch 2 oder 3, **dadurch gekennzeichnet, dass** die Fahrbahnmarkierungen (32) eine Information über die Richtung der Fahrspur (37, 38) umfassen.

5. Verfahren nach einem der Ansprüche 2 bis 4, **dadurch gekennzeichnet, dass** die Fahrbahnmarkierung (32) als in die Fahrbahn (12) eingelassene Magnete und/oder als der Fahrbahn zugeordnete RFID-Tags ausgeführt ist.

6. Verfahren nach einem der Ansprüche 1 bis 5, **dadurch gekennzeichnet, dass** dem Parkplatz (10) zusätzliche Positionsmarkierungen (34) zugeordnet sind, die Informationen über eine Position und/oder mögliche Fahrspuren (37, 38) bereitstellen.

7. Verfahren nach dem vorherigen Anspruch, **dadurch gekennzeichnet, dass** die Positionsmarkierungen (34) als RFID-Tags ausgeführt sind.

8. Fahrzeug (20) umfassend ein Steuergerät (40) und ein Lese-/ Schreibgerät (42), welches eingerichtet ist, Stellplatzmarkierungen (30) auszulesen und neu zu beschreiben, wobei das Fahrzeug (20) zur Ausführung des Verfahrens nach einem der Ansprüche 1 bis 7 eingerichtet ist.

9. System umfassend einen Parkplatz (10) umfassend eine Vielzahl von Stellplätzen, wobei jeder Stellplatz eine Stellplatzmarkierung zugeordnet ist, die eingerichtet ist, zumindest eine Information über die Belegung des jeweiligen Stellplatzes zu speichern, und ein Fahrzeug (20) gemäß Anspruch 8 die eingerichtet sind, gemeinsam das Verfahren nach einem der Ansprüche 1 bis 7 auszuführen.

## Claims

1. Method for guiding a vehicle (20) to a free parking space (18) in a car park (10) having a large number of parking spaces (14), wherein each parking space (14) is assigned a parking space marking (30), **characterized in that** the parking space marking (30) stores at least one item of information about the occupancy of the parking space (14), and the vehicle (20) comprises a read/write device (42), which is set up to read parking space markings (30) and to rewrite them, wherein, as it enters a parking space (14), the vehicle (20) marks the parking space (14) as occupied via the parking space marking (30) by means of the read/write device (42) and, as it leaves the parking space (14), marks the parking space (14) as free again via the parking space marking (30) by means of the read/write device (42).

2. Method according to Claim 1, **characterized in that** a roadway (12) of the car park (10) leads past the parking spaces (14) and the roadway (12) is assigned roadway markings (32), via which the vehicle (20) can detect a lane (37, 38), wherein, during travel on the roadway (12), the vehicle (20) reads the parking space markings (30) of the parking spaces (14) adjoining the roadway (12) and, when a free parking space (18) is detected, the vehicle (20) leaves the roadway (12) and parks in the free parking space (18).

3. Method according to Claim 1 or 2, **characterized in that** the parking space markings (30) are implemented as RFID tags, which are each assigned to a parking space (14), and **in that** the RFID tag stores at least the information about the occupancy about the parking space (14) .

4. Method according to Claim 2 or 3, **characterized in that** the roadway markings (32) comprise information about the direction of the lane (37, 38).

5. Method according to one of Claims 2 to 4, **characterized in that** the roadway marking (32) is implemented as magnets let into the roadway (12) and/or as RFID tags assigned to the roadway.

6. Method according to one of Claims 1 to 5, **characterized in that** additional position markings (34), which provide information about a position and/or possible lanes (37, 38), are assigned to the car park (10) .

7. Method according to the preceding claim, **characterized in that** the position markings (34) are implemented as RFID tags.

8. Vehicle (20) comprising a control device (40) and a read/write device (42), which is set up to read and rewrite parking space markings (30), wherein the vehicle (20) is set up to carry out the method according to one of Claims 1 to 7.

9. System comprising a car park (10) comprising a large number of parking spaces, wherein each parking space is assigned a parking space marking which is set up to store at least one item of information about the occupancy of the respective parking space, and a vehicle (20) according to Claim 8, which are set up to carry out the method according to one of Claims 1 to 7 jointly.

## Revendications

1. Procédé de guidage d'un véhicule (20) vers une place de stationnement libre (18) dans un parc de stationnement (10) comprenant un grand nombre de places de stationnement (14), chaque place de stationnement (14) étant associée à une marque de place de stationnement (30), **caractérisé en ce que** la marque de place de stationnement (30) mémorise au moins une information sur l'occupation de la place de stationnement (14) et le véhicule (20) comprend un dispositif de lecture/écriture (42) qui est conçu pour lire et réécrire des marques de place de stationnement (30), le véhicule (20), lorsqu'il se gare dans une place de stationnement (14), marquant la place de stationnement (14) comme étant occupée par le biais de la marque de place de stationnement (30) à l'aide du dispositif de lecture/écriture (42) et, lorsqu'il quitte la place de stationnement (14), marquant à nouveau la place de stationnement (14) comme étant libre par le biais de la marque de place de stationnement (30) à l'aide du dispositif de lecture/écriture (42).

2. Procédé selon la revendication 1, **caractérisé en ce qu'**un couloir de circulation (12) du parc de stationnement (10) passe devant les places de stationnement (14) et des marques de couloir de circulation (32), permettant au véhicule (20) de reconnaître une voie de circulation (37, 38), étant associée au couloir de circulation (12), le véhicule (20) lisant les marques de place de stationnement (30) des places de stationnement (14) adjacentes au couloir de circulation (12) lorsqu'il roule sur le couloir de circulation (12) et le véhicule (20), lorsqu'il reconnaît une place de stationnement libre (18), quittant le couloir de circulation (12) et se garant à la place de stationnement libre (18).

3. Procédé selon la revendication 1 ou 2, **caractérisé en ce que** les marques de places de stationnement (30) sont réalisés sous la forme d'étiquettes RFID qui sont chacune associées à une place de stationnement (14) et **en ce que** l'étiquette RFID mémorise au moins l'information sur l'occupation de la place de stationnement (14).

4. Procédé selon la revendication 2 ou 3, **caractérisé en ce que** les marques de couloir de circulation (32) comportent une information sur le sens de la voie de circulation (37, 38).

5. Procédé selon l'une des revendications 2 à 4, **caractérisé en ce que** la marque de couloir de circulation (32) est réalisée sous la forme d'aimants intégrés dans le couloir de circulation (12) et/ou sous la forme d'étiquettes RFID associées au couloir de circulation.

6. Procédé selon l'une des revendications 1 à 5, **caractérisé en ce que** le parc de stationnement (10) est associé à des marques de position supplémentaires (34) qui fournissent des informations sur une position et/ou des voies de circulation possibles (37, 38).

7. Procédé selon la revendication précédente, **caractérisé en ce que** les marques de position (34) sont réalisées sous la forme d'étiquettes RFID.

8. Véhicule (20) comprenant une dispositif de commande (40) et un dispositif de lecture/écriture (42) qui est conçu pour lire et réécrire les marques de places de stationnement (30), le véhicule (20) étant conçu pour mettre en œuvre le procédé selon l'une des revendications 1 à 7.

9. Système comprenant un parc de stationnement (10) comprenant un grand nombre de places de stationnement, chaque place de stationnement étant associée à une marque de place de stationnement qui est conçue pour mémoriser au moins une information sur l'occupation de la place de stationnement respective, et un véhicule (20) selon la revendication 8, lesquels sont conçus pour mettre en œuvre conjointement le procédé selon l'une des revendications 1 à 7.
